# EUROPÄISCHE PATENTANMELDUNG

(11) **EP 0 704 266 A1**
(43) Veröffentlichungstag der Anmeldung: **03.04.1996**
(21) Anmeldenummer: 95115118.2
(22) Anmeldetag: 26.09.1995
(51) Int. Cl.: B23B 51/00

(54) **Bohrvorrichtung zum Herstellen von Bohrungen mit Hinterschneidungen in Werkstücken**

(30) Priorität: 29.09.1994 DE 9415741 U
(71) Anmelder: Eischeid, Karl, D-51766 Engelskirchen (DE)
(72) Erfinder: Eischeid, Karl, D-51766 Engelskirchen (DE)
(74) Vertreter: Eichler, Peter

(57) **Zusammenfassung**

Bohrvorrichtung (10) zum Herstellen von Bohrungen mit Hinterschneidungen in Werkstücken, insbesondere in Fassadenplatten, mit einem Bohrer (15), dessen Bohrschaft mindestens eine über den Bohrschaftumfang (18) radial vorstehende Seitenschneide (14) aufweist und der von einem Bohrerantrieb mit taumelnden Schaftbewegungen rotierbar ist.

Um eine Bohrvorrichtung (10) mit den eingangs genannten Merkmalen so zu verbessern, daß Bohrer (15) mit kurzem Bohrschaft auch dann eingesetzt werden können, wenn der Gegenstand, in dem die mit Hinterschneidung versehene Bohrung herzustellen ist, eine größere Dicke aufweist, wird sie so ausgebildet, daß am antriebsseitigen Ende des Bohrschafts oder einem damit verbundenen Antriebsteil (23) ein Überwurfteil (25) befestigt ist, das mit axialem Abstand zur Seitenschneide (14) angeordnet ist und bohrvorschubseitig Schneidmittel (27) mit einem den Schneidradius der Seitenschneide (14) übersteigenden Schneidradius (29) aufweist.

## Beschreibung

Die Erfindung bezieht sich auf eine Bohrvorrichtung zum Herstellen von Bohrungen mit Hinterschneidungen in Werkstükken, insbesondere in Fassadenplatten, mit einem Bohrer, dessen Bohrschaft mindestens eine über den Bohrschaftumfang radial vorstehende Seitenschneide aufweist und der von einem Bohrerantrieb mit taumelnden Schaftbewegungen rotierbar ist.

Eine derartige Bohrvorrichtung ist aus dem DE-GM 91 04 326 bekannt. Die Länge des Bohrschafts ist relativ gering, um die Hinterschneidungen ohne störende Einflüsse herstellen zu können, die sich bei längerem Bohrschaft aus dessen Elastizität ergeben könnten. Es ergeben sich auch unerwünschte Einflüsse aus dem Bereich des Bohrerantriebs bzw. einer gelenkigen Verbindungskupplung, für die ebenfalls axiale Längen benötigt werden. Die Präzision der Vorrichtung, mit der die taumelnden Schaftbewegungen erzeugt werden, müßte vergleichsweise groß sein bzw. es besteht die Gefahr, daß die Führungsgenauigkeit infolge Verschleißes im Laufe der Betriebsdauer der Bohrvorrichtung nachläßt. Infolge des kurzen Bohrschafts ist die Bohrtiefe des Bohrers begrenzt. Sie reicht ohne weiteres aus für das Herstellen von Hinterschneidungen in Fassadenplatten, wenn diese eine übliche Dicke im Bereich von wenigen Zentimetern aufweist. Bei dickeren Elementen, auch bei dickeren Fassadenplatten, beispielsweise solchen in Verbundausführung, können Bohrer mit kurzem Bohrschaft nicht mehr eingesetzt werden.

Der Erfindung liegt daher die Aufgabe zugrunde, eine Bohrvorrichtung mit den eingangs genannten Merkmalen so zu verbessern, daß Bohrer mit kurzem Bohrschaft auch dann eingesetzt werden können, wenn der Gegenstand, in dem die mit Hinterschneidung versehene Bohrung herzustellen ist, eine größere Dicke aufweist.

Diese Aufgabe wird dadurch gelöst, daß am antriebsseitigen Ende des Bohrschafts oder einem damit verbundenen Antriebsteil ein Überwurfteil befestigt ist, das mit axialem Abstand zur Seitenschneide angeordnet ist und bohrvorschubseitig Schneidmittel mit einem den Schneidradius der Seitenschneide übersteigenden Schneidradius aufweist.

Für die Erfindung ist von Bedeutung, daß die Bohrfähigkeit der Bohrvorrichtung ergänzt wird. Es werden zusätzliche Schneidmittel vorgesehen, die in das Werkstück eindringen können, so daß das dem Bohrschaftende nachfolgende Antriebsteil nicht auf der bohrseitigen Werkstückfläche aufsitzt, wenn die vergleichsweise kurze Bohrlänge des Bohrers überschritten wird. Es hängt lediglich von der radialen Dimensionierung des Überwurfteils ab, wie weit die Bohrvorrichtung in das Werkstück eindringen kann. Wenn der Bohrer nach dem Erreichen der vorbestimmten Eintauchtiefe radial ausgelenkt wird, so daß der Bohrschaft taumelnde Schaftbewegungen ausführt, können die bohrvorschubseitigen Schneidmittel des Überwurfteils ebenfalls taumeln, was nur eine geringfügige Entfernung weiteren Werkstoffs zur Folge hat und bei der Herstellung der Hinterschneidung nicht stört. Da das Überwurfteil vom Bohrschaft bzw. von einem damit verbundenen Antriebsteil separat ist, braucht es nur bedarfsweise eingesetzt zu werden, so daß der Bohrer im übrigen auch ohne das Überwurfteil eingesetzt werden kann, falls das Werkstück nur dünn ist und geringe Toleranzen hat. Das separate Überwurfteil kann ohne weiteres auch bei bereits vorhandenen Bohrvorrichtungen bzw. in Verbindung mit bereits in Betrieb befindlichen Bohrern eingesetzt werden, so daß deren Nachrüstung problemlos möglich ist.

Um den baulichen Aufwand gering zu halten, und die Bohrwirkung des Bohrers bzw. seiner Seitenschneide beim axialen Vorschub des Bohrers voll ausnutzen zu können, wird die Bohrvorrichtung so ausgebildet, daß die bohrvorschubseitigen Schneidmittel ausschließlich außerhalb des Schneidradius der Seitenschneide vorhanden sind. Infolgedessen kann das Überwurfteil auch besser so ausgebildet werden, daß es mit dem Bohrer bzw. mit der Bohrvorrichtung leichter zusammengebaut werden kann.

Die Schneidmittel des Überwurfteils können unterschiedlich ausgebildet sein. Wenn damit gerechnet werden muß, daß das Werkstück im Bereich der bohrvorschubseitigen Schneidmittel sehr hart bzw. widerstandsfähig ist, wird die Bohrvorrichtung so ausgebildet, daß die bohrvorschubseitigen Schneidmittel mindestens ein mit Diamantpulver beschichtetes oder aus Diamantpulver gesintertes, in das Überwurfteil eingesetztes Schneidstück aufweisen. Das Einsetzen der Schneidstücke in das Überwurfteil gewährleistet eine in Drehumfangsrichtung formschlüssige Mitnahme der Schneidstücke und ihre Beschichtung mit Diamantpulver kann auf die Härte des Werkstücks abgestimmt werden.

Es ist aber auch möglich, die Bohrvorrichtung so auszubilden, daß die bohrvorschubseitigen Schneidmittel mindestens ein in das Überwurfteil eingesetztes Hartmetallstück sind. Hartmetallstücke genügen als Schneidmittel in einer Vielzahl von Anwendungsfällen und sind insbesondere dazu geeignet, größere Mengen des Bohrguts auszuräumen, insbesondere wenn dieses vergleichsweise weich ist.

In Abstimmung auf das Ende des Bohrschafts bzw. auf ein damit verbundenes Antriebsteil wird die Bohrvorrichtung so ausgebildet, daß das Überwurfteil eine Hülse ist, an deren bohrvorschubseitiger Kante die Schneidmittel angeordnet sind. Die Hülse umgibt dicht das Ende des Bohrschafts bzw. ein damit verbundenes Antriebsteil. Da diese letztgenannten üblicherweise zylindrisch ausgebildet sind, genügt ein kreiszylindrisches Hülsenstück, das von einem Rohr abgelängt werden kann und keiner Sonderherstellung bedarf. Es sind natürlich auch andere Querschnittsformen des Überwurfteils denkbar, wenn das zweckmäßig ist. Eine unrunde oder mehrkantige Ausgestaltung des Überwurfteils ermöglicht beispielsweise dessen formschlüssige Mitnahme durch das Ende des Bohrschafts oder des damit verbundenen Antriebteils der Verbindungskupplung.

Überlicherweise wird es jedoch zur Befestigung des Überwurfteils und zu dessen Drehmitnahme genügen, die Bohrvorrichtung so auszubilden, daß das Überwurfteil an dem Ende des Bohrschafts oder an dem damit verbundenen Antriebsteil in vorzugsweise einer einzigen Stellung formschlüssig oder durch formschlüssig eingreifende Schrauben befestigt ist. Eine einzige formschlüssige Stellung des Überwurfteils wird erreicht, wenn dieses eine einzige vom Kreisquerschnitt abweichende Fläche hat, insbesondere eine plane ebene Fläche, zu der das Ende des Bohrschafts oder das damit verbundene Antriebsteil formschlüssig paßt. Das Überwurfteil wird dann immer in seiner richtigen Stellung relativ zum Bohrschaft bzw. zu dessen Seitenschneide angebaut. Das ist insbesondere dann von Bedeutung, wenn die Schneidmittel in einer einzigen vorbestimmten Position zur Seitenschneide angeordnet werden sollen, wenn also das Überwurfteil beispielsweise nur ein einziges Schneidstück hat, das vertikal oberhalb der Seitenschneide positioniert werden soll, oder 180° gegenüber, weil damit ein gutes Ergebnis beim Eindringen des Schneidstücks in das Werkstück bei gutem Rundlauf erreicht wird.

Eine weitere vorteilhafte Ausgestaltung der Bohrvorrichtung ergibt sich dadurch, daß das Antriebsteil mit dem Bohrschaft des Bohrers starr verbunden ist, daß das Antriebsteil ein Kupplungsteil einer gelenkigen Verbindungskupplung ist, das im Durchmesser stärker ist, als es dem Schneidradius der Seitenschneide entspricht, und daß das Überwurfteil an dem Kupplungsteil befestigt ist. Infolgedessen wird das Überwurfteil nicht auf die Ausbildung des Bohrschafts abgestimmt, sondern auf die Ausbildung des Kupplungsteils, wodurch zugleich gewährleistet ist, daß dieses in das Werkstück ohne daran anzustoßen eintauchen kann. Größere Eintauchtiefen bzw. Bohrtiefen sind infolgedessen kein grundsätzliches Problem.

Eine Bohrvorrichtung mit den vorgenannten Merkmalen kann so weitergebildet werden, daß der Bohrschaft mit dem Kupplungsteil mittels eines Übergangskonus starr verbunden ist, und daß die Schneidmittel auf der axialen Höhe des Übergangskonus angeordnet sind und sich daran abstützen. Dabei wird der Übergangskonus dazu benutzt, die Schneidmittel axial direkt abzustützen. Andererseits wird durch diese Anordnung gewährleistet, daß die Schneidmittel radial einwärts bis dicht an den Bohrschaft heran angeordnet werden können, um eine Überdeckung ihres Schneidbereichs mit dem Schneidbereich der Seitenschneide zu erreichen, so daß zwischen dem Bohrschaft und den bohrvorschubseitigen Schneidmitteln kein Abstand ist, in dem ungebohrtes Material stehen bleiben könnte.

Des weiteren kann die Bohrvorrichtung so ausgebildet werden, daß sie eine den Abstand der Bohrsohle von der Frontfläche der Fassadenplatte beim Bohren bestimmende Einrichtung aufweist. Infolgedessen ist die Hinterschneidung der hergestellten Bohrung stets an derselben konstruktiv vorbestimmten Stelle. Das ist vorteilhaft für die Präzision und für die Haltbarkeit der zu erstellenden Fassade. Außerdem können dadurch Toleranzen in der Dicke der Fassadenplatte besser beherrscht werden.

Die Erfindung wird anhand eines in der Zeichnung dargestellten Ausführungsbeispiels näher erläutert. Es zeigt:
- Fig.1: die Darstellung einer Verbindungskupplung zwischen einem Bohrer und einem nicht dargestellten Bohrerantrieb in axialer Vorschubstellung des Bohrers,
- Fig.2: die in Fig.1 dargestellte Anordnung, jedoch in radialer Vorschubstellung des Bohrers bzw. seiner Seitenschneide,
- Fig.3: eine Aufsicht auf das in den Fig.1,2 dargestellte Überwurfteil,
- Fig.4: eine geschnittene Seitendarstellung des Überwurfteils der Fig.3, und
- Fig.5: den Querschnitt einer mit der Bohrvorrichtung hergestellten Bohrung in einer Fassadenplatte in Verbundbauweise.

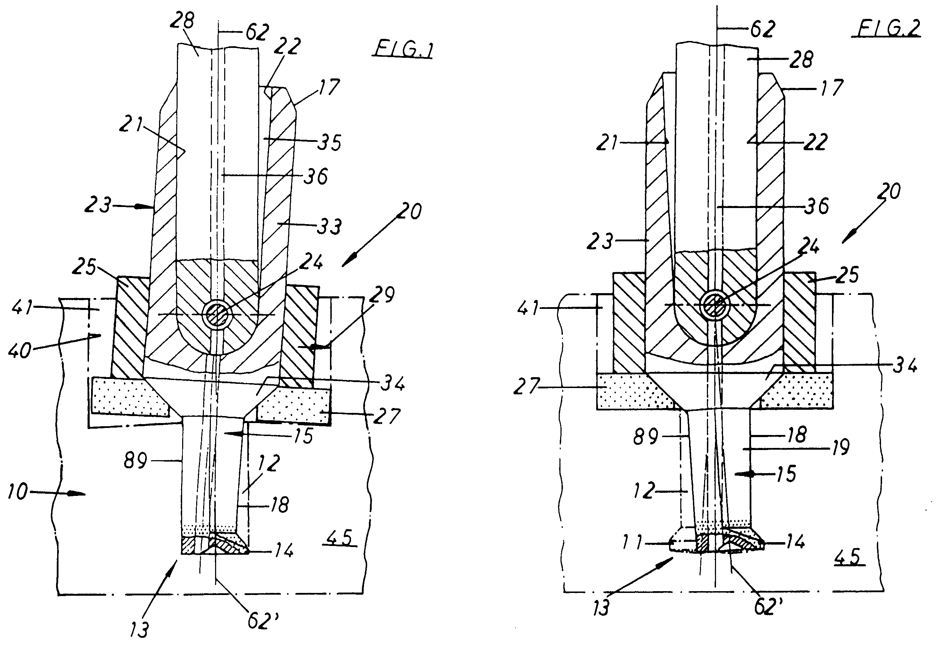

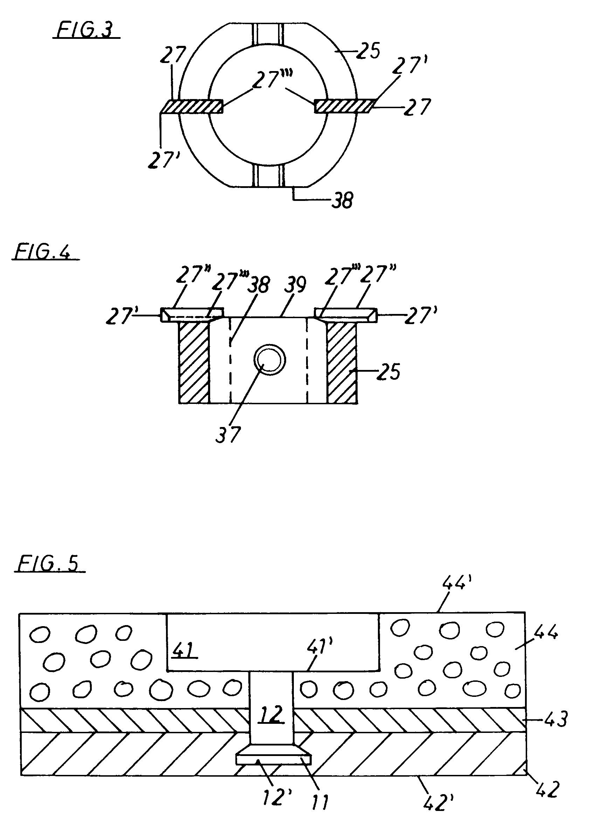

Die in Fig.1 dargestellte Bohrvorrichtung 10 besteht im wesentlichen aus einem Bohrer 15, der über eine gelenkige Verbindungskupplung 20 mit einem nicht dargestellten Bohrerantrieb drehangetrieben wird, welcher an einem Kupplungsstück 28 der Verbindungskupplung 20 angreift. Der Bohrerantrieb besorgt auch einen axialen Vorschub, um eine Vorbohrung 12 im Werkstück 45 herzustellen. Nach dem Herstellen der Vorbohrung 12 wird eine am Bohrschaft 19 angebrachte Seitenschneide 14, die über den Bohrschaftumfang 18 radial vorspringt, in radialer Richtung vorgetrieben, so daß eine Hinterschneidung 11 hergestellt wird, wie aus Fig.2 ersichtlich ist.

Um den Bohrer 15 axial und radial beaufschlagen zu können, ist die Verbindungskupplung 20 in geeigneter Weise ausgestaltet. Sie besteht im wesentlichen aus dem Kupplungsstück 28, welches als rundzylindrisches Teil ausgebildet ist, das an seinem bohrerseitigen Ende halbkugelig abgerundet ist. Es ist patrizenartig in einer Ausnehmung 35 eines Kupplungsteils 33 der Verbindungskupplung 20 angeordnet. Beide Teile sind durch einen Querstift 24 rotationsfest so miteinander verbunden, daß sich das Kupplungsstück 28 bzw. das Kupplungsteil 33 in einer einzigen Ebene relativ zueinander begrenzt verkippen können, beispielsweise in der Darstellungsebene der Fig.1,2. Hierzu erweitert sich die Ausnehmung 35 vor Bereich des Verbindungsstifts 24 gleichmäßig in Richtung auf den Bohrerantrieb bzw. vom Bohrer 15 weg. Die Erweiterung ist so gestaltet, daß eine Anlagefläche 21 vorhanden ist, an der das Kupplungsstück 28 anliegt, wenn seine Achse 62 mit der Bohrerachse 62' fluchtet. Infolgedessen entspricht die Darstellung der Fig.1 der axialen Vorschubstellung. Wenn das Kupplungsstück 28 an der zweiten, der Anlagefläche 21 gegenüberliegenden Anlagefläche 22 anliegt, ist der Bohrer 15 in Bezug auf das Kupplungsstück 28 abgewinkelt angeordnet, wie auch das Kupplungsteil 33 der Verbindungskupplung 20, mit dem der Bohrer 15 starr verbunden ist. Das Kupplungsteil 33 der Verbindungskupplung 20 ist radial so weit wie vorbestimmt verschwenkt, so daß die Seitenschneide 14 in vollem Umfang radial in den Werkstoff des Werkstücks 45 eindringen kann.

Die in Fig.1,2 dargestellten Stellungen werden erreicht, indem auf die Schrägfläche 17 des Kupplungsteils 33 eingewirkt wird. Das ist beispielsweise mit einem nicht dargestellten Druckkörper möglich, der koaxial zu dem Kupplungsstück 28 so bewegt wird, daß das Kupplungsteil 33 entweder die in Fig.1 dargestellte Stellung einnimmt, oder die in Fig.2 dargestellte Stellung. Die Erläuterung dieser Mechanik ist hier nicht erforderlich, da sie im Deutschen Gebrauchsmuster 91 04 326 als Zwangsführung zwischen dem Druckstück und dem Kupplungsteil 33 ausführlich beschrieben wurde, worauf hiermit Bezug genommen wird.

Die Fig.1,2 zeigen koaxial mit der Achse 62 eine Bohrung 36, durch die Kühlmittel in den Bereich der Sohle der Vorbohrung 12 im Bereich der Seitenschneide 14 zum Entfernen des Bohrkleins eingeleitet werden kann.

Der Bohrer 15 ist mit dem Kupplungsteil 23 einstückig ausgebildet. Zwischen dem antriebsseitigen Ende des Bohrschafts 19 und dem Kupplungsteil 33 ist ein Übergangskonus 34 vorhanden. Der größte Durchmesser dieses Übergangskonus 34 entspricht dem Außendurchmesser des zylindrischen Kupplungsteils 33, während der kleinste Konusdurchmesser dem größten Bohrschaftdurchmesser entspricht. Der größte Bohrschaftdurchmesser ist fast so groß, wie der Durchmesser der Vorbohrung 12, die durch axialen Vorschub des Bohrers 15 von dessen Spitze 13 hergestellt wird, deren bohrende Fläche auch durch die Seitenschneide 14 mitbestimmt wird, so daß beim Rotieren des Bohrschafts 19 eine entsprechend große Bohrfläche gegeben ist. Damit der Bohrschaft 19 zusammen mit der Seitenschneide 14 eine zylindrische Vorbohrung 12 herstellen kann, deren Durchmesser so klein wie möglich bzw. etwa gleich dem größter: Durchmesser des Bohrschafts 19 ist, ist dieser in seinem der Seitenschneide 14 gegenüberliegenden Bereich mit einer Abflachung 89 versehen. Die Abflachung hat denselben Radius, wie der Bohrschaft 19 im übrigen, jedoch sind die Radienmittelpunkte der Abflachung von oben zunehmend zur Seitenschneide 14 hin verlagert. Diese Abflachung ermöglicht auch das Einstecken des Bohrers 15 zusammen mit der Seitenschneide 14 in eine vorgefertigte Vorbohrung 12, deren Radius nur etwa ebenso groß ist, wie der Radius der Seitenschneide 14.

Um den Außenumfang des Kupplungsteils 33 herum ist ein Überwurfteil 25 angeordnet, das als Hülse ausgebildet ist, deren Innendurchmesser nur so viel größer ist, als der Außendurchmesser des Kupplungsteils 33, daß das Überwurfteil problemlos aufgeschoben werden kann. Die Länge des Überwurfteils wird dem Kupplungsteil 33 entsprechend angepaßt. Es braucht im Grundsatz jedoch nur so lang zu sein, daß es auf dem Umfang verkippungsfrei sitzt. Außerdem muß das Überwurfteil 25 auf dem Kupplungsteil 33 befestigt werden. Hierzu sind zwei Gewindebohrungen 37 vorgesehen, in die nicht dargestellte Befestigungsschrauben eingedreht werden können. Diese Befestigungsschrauben greifen mit beispielsweise gewindefreiem Fortsatz in das Kupplungsteil ein und bewirken so, daß das Überwurfteil 25 verdrehfest auf dem Kupplungsteil 33 sitzt. Damit die Befestigungsschrauben plan an dem Überwurfteil 25 anliegen können, ist dieses im Bereich der Befestigungsöffnungen mit Abflachungen 38 versehen.

Das Überwurfteil 25 ist bohrvorschubseitig, also an seiner Kante 39, mit Schneidmitteln 27 versehen. Als Schneidmittel 27 sind in Fig.3 zwei Hartmetallstücke dargestellt, die jeweils eine hülsenumfangsparallele freigeschnittene bzw. mit einem Freiwinkel versehene radiale Schneidkante 27' und jeweils eine bohrvorschubseitige freigeschnittene Schneidkante 27'' haben. Mit den Schneidkanten 27' springen diese Schneidmittel 27 über den Außenumfang des Überwurfteils 25 radial vor. Mit den freigeschnittenen Schneidkanten 27'' springen die Schneidmittel 27 axial in Bohrvorschubrichtung vor, haben jedoch einen axialen Abstand von der Seitenschneide 14. Die Schneidmittel 27 sind in die bohrvorschubseitige Kante 39 des Überwurfteils 25 eingelassen, so daß eine sichere Drehmitnahme gegeben ist.

Die Schneidmittel 27 ragen über den Innenumfang des hülsenförmigen Überwurfteils 25 nach innen vor, so daß sie mit ihren Enden 27''' Überschubanschläge für das Überwurfteil 25 darstellen. Mit den an das Übergangskonusteil 34 angepaßten Enden 27''' stützen sich die Schneidmittel 27 direkt an dem Übergangskonusteil 34 ab, welches die Schneidmittel 27 infolgedessen direkt beaufschlagen kann. Es ergibt sich eine direkte Krafteinleitung vom Kupplungsteil 33 über die Schneidmittel 27 in das Werkstück 45, insbesondere, wenn die nicht dargestellten Befestigungsschrauben der Befestigungsbohrungen 37 mit Spiel in das Überwurfteil 25 eingreifen, so daß infolgedessen für eine spielfreie Anlage der Schneidmittel 27 am Übergangskonus 34 gesorgt ist.

In Fig.1 sind die Kupplungsmittel 27 lediglich schematisch dargestellt, um anzudeuten, daß ihre Ausbildung auch anders sein kann, als in den Fig.3,4 dargestellt wurde. Beispielsweise können die Schneidmittel 27 mit Diamantpulver beschichtete Schneidstücke bzw. Diamantpellets sein, welche in ähnlicher Weise, wie die Hartmetallstücke, in die bohrvorschubseitige Kante 39 des Überwurfteils 25 zur sicheren Drehmitnahme eingesetzt und dort befestigt sind. Derartige Schneidstücke können ebenfalls am Übergangskonus 34 anliegen und ragen radial über den Außenumfang des Überwurfteils 25 vor.

Der axiale Vorstand der Schneidmittel 27 ist so groß, daß das Überwurfteil 25 nicht zur Anlage an der Wand 40 der Vorbohrungserweiterung 41 kommen kann, wenn der Bohrerantrieb bzw. die Verbindungskupplung 20 bzw. deren Kupplungsteil 33 in das Werkstück 45 eindringen. Fig.1 zeigt die dementsprechende Schiefstellung des Überwurfteils 25 bei fluchtener Ausrichtung der Achse 62' des Bohrers 15 mit der Achse 62 des Kupplungsstücks 28. Wenn demgegenüber der Bohrer 15 durch Einwirkung eines Betätigungsteils auf die Schrägfläche 17 so schräggestellt wird, daß der Bohrer 15 taumelnde Bewegungen ausführt, bei denen seine Achse 62' mit der Achse des Kupplungsstücks 28 fluchtet, werden die Schneidteile 27 horizontal gestellt, wobei sie den Boden der Bohrungserweiterung 41 der Vorbohrung 12 gemäß Fig.2 einebnen.

Fig.5 zeigt die Ausbildung einer Vorbohrung 12 mit ihrer Bohrungserweiterung 41 nach dem Herstellen der Hinterschneidung 11 gemäß Fig.2. Die Bohrung wurde in einer vergleichsweise starken Fassadenplatte angeordnet, die aus einer Keramikfront 42 besteht, welche über eine Mörtel- oder Klebeschicht 43 mit einem Trägermaterial 44 verbunden ist. Die Hinterschneidung 11 kann in der Keramikfront 42 dicht an der Frontfläche 42' angeordnet werden und der einzusetzende Dübel wird in dieser Hinterschneidung 11 gegen Herausziehen aus der Bohrung formschlüssig verankert. Die Bohrungssohle 12' der Vorbohrung 12 hat einen vorbestimmten Abstand von der Frontfläche 42'. Der Abstand kann so gewählt werden, daß die Hinterschneidung 11 festigkeitsmäßig optimal in der Keramikfront 42 angeordnet ist. Für die gewünschte Anordnung der Hinterschneidung 11 sorgt eine Einrichtung, mit der der Abstand der Bohrsohle 12' von der Frontfläche 42' bestimmt wird. Die Ausbildung dieser Einrichtung kann vielfältig sein und ist allgemein bekannt. Beispielsweise kann eine numerisch gesteuerte Bohrwerksvorrichtung verwendet werden, mit der der Bohrer 15 in vorbestimmtem Ausmaß in die Fassadenplatte bohrend vorgeschoben wird, bis eine voreingestellte Tiefe erreicht ist, die sich auf eine Bezugsfläche bezieht, auf der das Werkstück bzw. die Fassadenplatte mit ihrer Frontfläche 42' aufliegt. Ein weiterer Vorteil außer der exakten Positionierung der Hinterschneidung 11 ist es, daß die Dicke des Werkstücks zulässige Toleranzen haben kann, ohne daß dadurch die vorbestimmte Anordnung der Hinterschneidung 11 und die Länge der Vorbohrung 12 beeinträchtigt würden. Der in dieser Vorbohrung 12 anzuordnende Befestigungsdübel hat den gewünschten exakten Sitz, beispielsweise mit Auflage eines vorbohrungseingangsseitigen Dübelkragens auf der Bodenfläche 41' der Bohrungserweiterung 41. Unterschiedliche Dicken eines Werkstücks wirken sich lediglich dahingehend aus, daß die Bodenfläche 41' weiter weg von der oder dichter an der Rückseite 44' des Trägermaterials angeordnet ist.

Von der Hinterschneidung 11 ausgehend erstreckt sich die Vorbohrung 12 durch die Mörtel- oder Klebeschicht 43 hindurch in das Trägermaterial, so daß die Bohrungserweiterung 41 ausschließlich in diesem angebracht ist. Die von dem Überwurfteil 25 mit ihren Schneidmitteln 27 hergestellte Bohrungserweiterung 41 befindet sich also nur in diesem Trägermaterial 44 und ermöglicht eine Herstellung bzw. Positionierung der Hinterschneidung 11 in der Keramikfrontplatte 42 auch dann, wenn die Fassadenplatte infolge des Trägermaterials 44 vergleichsweise dick ausgebildet ist.

Das Trägermaterial 44 des in Fig.5 dargestellten Werkstücks kann dessen Verwendungsbedingungen angepaßt werden. Es kann beispielsweise ein preiswertes Material zur Verstärkung bzw. zur Verdickung des Werkstücks sein, auch ein Material, das sich mit den Schneidmitteln des Überwurfteils leicht zerkleinern läßt. Als Verbundwerkstück kann die Platte auch so ausgebildet sein, daß das Trägermaterial eine Isolierschicht zur Wärmedämmung ist.

## Patentansprüche

1. Bohrvorrichtung (10) zum Herstellen von Bohrungen mit Hinterschneidungen (11) in Werkstücken, insbesondere in Fassadenplatten, mit einem Bohrer (15), dessen Bohrschaft (19) mindestens eine über den Bohrschaftumfang (18) radial vorstehende Seitenschneide (14) aufweist und der von einem Bohrerantrieb mit taumelnden Schaftbewegungen rotierbar ist, **dadurch gekennzeichnet**, daß am antriebsseitigen Ende des Bohrschafts (19) oder einem damit verbundenen Antriebsteil (23) ein Überwurfteil (25) befestigt ist, das mit axialem Abstand zur Seitenschneide (14) angeordnet ist und bohrvorschubseitig Schneidmittel (27) mit einem den Schneidradius der Seitenschneide (14) übersteigenden Schneidradius (29) aufweist.

2. Bohrvorrichtung nach Anspruch 1, **dadurch gekennzeichnet**, daß die bohrvorschubseitigen Schneidmittel (27) ausschließlich außerhalb des Schneidradius der Seitenschneide (14) vorhanden sind.

3. Bohrvorrichtung nach Anspruch 1 oder 2, **dadurch gekennzeichnet**, daß die bohrvorschubseitigen Schneidmittel (27) mindestens ein mit Diamantpulver beschichtetes oder aus Diamantpulver gesintertes, in das Überwurfteil (25) eingesetztes Schneidstück aufweisen.

4. Bohrvorrichtung nach einem oder mehreren der Ansprüche 1 bis 3, **dadurch gekennzeichnet**, daß die bohrvorschubseitigen Schneidmittel (27) mindestens ein in das Überwurfteil (25) eingesetztes Hartmetallstück sind.

5. Bohrvorrichtung nach einem oder mehreren der Ansprüche 1 bis 4, **dadurch gekennzeichnet**, daß das Überwurfteil (25) eine Hülse ist, an deren bohrvorschubseitiger Kante (39) die Schneidmittel (27) angeordnet sind.

6. Bohrvorrichtung nach einem oder mehreren der Ansprüche 1 bis 4, **dadurch gekennzeichnet**, daß das Überwurfteil (25) an dem Ende des Bohrschafts (19) oder an dem damit verbundenen Antriebsteil (23) in vorzugsweise einer einzigen Stellung formschlüssig oder durch formschlüssig eingreifende Schrauben befestigt ist.

7. Bohrvorrichtung nach einem oder mehreren der Ansprüche 1 bis 6, **dadurch gekennzeichnet**, daß das Antriebsteil (23) mit dem Bohrschaft (19) des Bohrers (15) starr verbunden ist, daß das Antriebsteil (23) ein Kupplungsteil (33) einer gelenkigen Verbindungskupplung (20) ist, das im Durchmesser stärker ist, als es dem Schneidradius der Seitenschneide (14) entspricht, und daß das Überwurfteil (25) an dem Kupplungsteil (33) befestigt ist.

8. Bohrvorrichtung nach Anspruch 7, **dadurch gekennzeichnet**, daß der Bohrschaft (19) mit dem Kupplungsteil (33) mittels eines Übergangskonus (34) starr verbunden ist, und daß die Schneidmittel (27) auf der axialen Höhe des Übergangskonus (34) angeordnet sind und sich daran abstützen.

9. Bohrvorrichtung nach einem oder mehreren der Ansprüche 1 bis 8, **dadurch gekennzeichnet**, daß sie eine den Abstand der Bohrsohle (12') von der Frontfläche (42') der Fassadenplatte beim Bohren bestimmende Einrichtung aufweist.
